Europäisches Patentamt

European Patent Office

Office européen des brevets

(19)

(11) **EP 1 492 049 A1**

(12) **EUROPEAN PATENT APPLICATION**
published in accordance with Art. 158(3) EPC

(43) Date of publication:
**29.12.2004 Bulletin 2004/53**

(51) Int Cl.[7]: **G06T 1/00**, G06T 7/00

(21) Application number: **03745209.1**

(86) International application number:
**PCT/JP2003/003976**

(22) Date of filing: **28.03.2003**

(87) International publication number:
**WO 2003/083774 (09.10.2003 Gazette 2003/41)**

(84) Designated Contracting States:
**DE FR GB IT NL**

(30) Priority: **29.03.2002 JP 2002096003**

(71) Applicant: **NEC Corporation**
**Minato-ku, Tokyo 108-8001 (JP)**

(72) Inventor: **Kamei, Toshio**
**Tokyo 108-8001 (JP)**

(74) Representative: **VOSSIUS & PARTNER**
**Siebertstrasse 4**
**81675 München (DE)**

(54) **FACE META-DATA CREATION**

(57)     A face meta-data creating technique in which the description length is short and which is used to extract the face feature for face recognition immune to the local error. An area cut-out section (121) cuts out a local area of a face image. Frequency feature extracting means (122) extracts the frequency spectrum of the local area. Vector projection means (123) projects the obtained frequency feature onto a partial space to extract the face feature of the local area. A face meta-data unit (12) extracts the face features from local areas cut out in different positions, thus creating face features as face meta-data.

FIG. 1

**Description**

Technical Field

The present invention relates to a face recognition technique which can be used in face recognition such as face identification, face verification, facial expression recognition, sex classification based on a face, and age estimation based on a face and, more particularly, to a metadata generation unit and method and program for generating metadata related to face information projected as a still picture or moving pictures.

Background Art

The metadata is typically the data describing or representing meaning of the data. In a case of face recognition, metadata means the data regarding to the face data such as a still face picture or moving pictures.

As standardization activities of metadata for multimedia contents such as video, pictures, and voice, activities of MPEG-7 (an international standard for multimedia content description interface standardized by MPEG: Moving Pictures Experts Group, i.e., ISO/IEC JTC1/SC29/WG11) are well known. Among the activities, a face recognition descriptor is proposed as a descriptor of metadata related to face recognition (A. Yamada et al, "MPEG-7 Visual part of eXperimental Model Version 9.0", ISO/IEC JTC1/SC29/WG11 N3914, 2001).

In the face recognition descriptor, a face image clipped and normalized is subjected to a kind of subspace methods that is generally called an eigenface. Specifically, a basis matrix for extracting a feature of the face image is obtained and, using the basis matrix, a facial feature is extracted from the image as metadata. In addition, it is proposed to use a weighted absolute distance as a measure of similarity for the facial feature.

For the techniques related to face recognition, various methods are known. For example, a face recognition technique using an eigenspace method based on principal component analysis (Moghaddam et al., "Probabilistic Visual Learning for Object Representation", IEEE Transactions on Pattern Analysis and Machine Intelligence, Vol. 17, No. 7, pp. 696-710, 1997) and that based on discriminant analysis (W. Zhao et al., "Discriminant Analysis of Principal Components for Face Recognition", Proceedings of the IEEE Third International Conference on Automatic Face and Gesture Recognition, pp. 336-341, 1998) are known. In addition, a face identification method using independent component analysis is known (Umeyama et al., "Kyoshi-tsuki Dokuritsu Seibun Bunseki wo mochiita Kao no Dotei nitsuite [Face Identification Using Supervised Independent Component Analysis]", The Institute of Electronics, Information and Communication Engineers, PRMU99-27, 1999).

On the other hand, Japanese Unexamined Patent Publication No. 5-20442 and a document (Akamatsu et al., "Notan-gazo Macchingu niyoru Robasutona Shomen-gao no Shikibetsu Hoho - Fourier Supekutoru no KL Tenkai no Oyo - [Robust Full Face Identification Using Gray Scale Image Matching - Application of K-L Expansion of Fourier Spectrum -]", IEICE Transactions, J76-D-II, No. 7, pp. 1363-1373, 2001) each disclose a face image identification technique. According to this face image identification technique, a power spectrum of Fourier frequencies of a face image is subjected to the principal component analysis to obtain a facial feature, and face identification is performed using the obtained face feature. The power spectrum, obtained by Fourier transform, exhibits properties that the power spectrum is not changed in translation to derive a more favorable result than obtained by principal component analysis using pixels of an image as feature vectors.

In addition, an image matching method for dividing an image into local image areas to perform template matching is known (Saito, "Burokku Tohyoshori niyoru Shahei ni Gankyona Tenpureito Macchingu [Robust Template Matching for Occlusion Using Vote by Block]"), IEICE Transactions, Vol. J84-D-II, No. 10, pp. 2270-2279). According to this method, matching is performed every local area to obtain an evaluation. Evaluations of the respective local areas are accumulated to calculate the evaluation of matching. Alternatively, evaluations of the respective local areas are applied to a voting space to calculate the evaluation of matching.

However, in the known techniques, the principal component analysis or the independent component analysis is performed using pixel values obtained by uniformly sampling the whole face image or a Fourier spectrum of the whole image as input features. Therefore, a matching error generated in a part of the image (for example, a matching error caused by masking or a fluctuation in orientation of a face) has a ripple effect on vectors projected onto a subspace. Thus, the known techniques is disadvantageous in that the whole evaluation is influenced and identification accuracy is not increased. The reason is as follows. For example, when pixel features are subjected to the principal component analysis, basis vectors are obtained. In many cases, elements of the vectors have coefficients with respect to the whole pixels. Disadvantageously, feature vectors after projection are influenced by an error generated in a part of the areas.

On the other hand, in template matching, an image is divided into local image areas. Matching can be performed so as to absorb masking or the like. However, the computational cost for block matching is large. It is a problem in practical application.

Therefore, it is an object of the present invention to provide a face metadata generation technique in which a description length is short and the computational cost for matching can be reduced.

Another object of the present invention is to provide a face metadata generation technique which is capable of increasing the accuracy of face recognition.

Disclosure of Invention

The present invention provides a face metadata generating unit of generating metadata related to face information of an image, the face metadata generating unit including at least: area clipping means for clipping local areas of the image; frequency feature extracting means for extracting frequency features for the areas clipped by the area clipping means; and vector projection means for projecting feature vectors, which are vectors consisting of the frequency features extracted by the frequency feature extracting means, onto predefined subspaces, thereby extracting the feature vectors projected onto a plurality of different local areas to generate the feature vectors as face metadata.

In the above-mentioned face metadata generating unit, preferably, the frequency feature extracting means extracts power spectral intensities of Fourier frequencies, obtained by discrete Fourier transform, as frequency features. Alternatively, the frequency feature extracting means extracts expansion coefficients, obtained by discrete cosine transform or discrete sine transform, as frequency features.

Further, preferably, the vector projection means projects frequency feature vectors onto subspaces specified by basis vectors, which are previously obtained by the principal component analysis, discriminant analysis, or independent component analysis for the frequency features, to calculate principal component vectors.

The area clipping means may search for area positions corresponding to the respective local areas in the image to obtain clipping positions, and then clip the local areas.

Face metadata, extracted by the above-mentioned face metadata generating unit, has a compact description length, which leads to the achievement of face image matching at high speed with high accuracy.

Brief Description of the Drawing

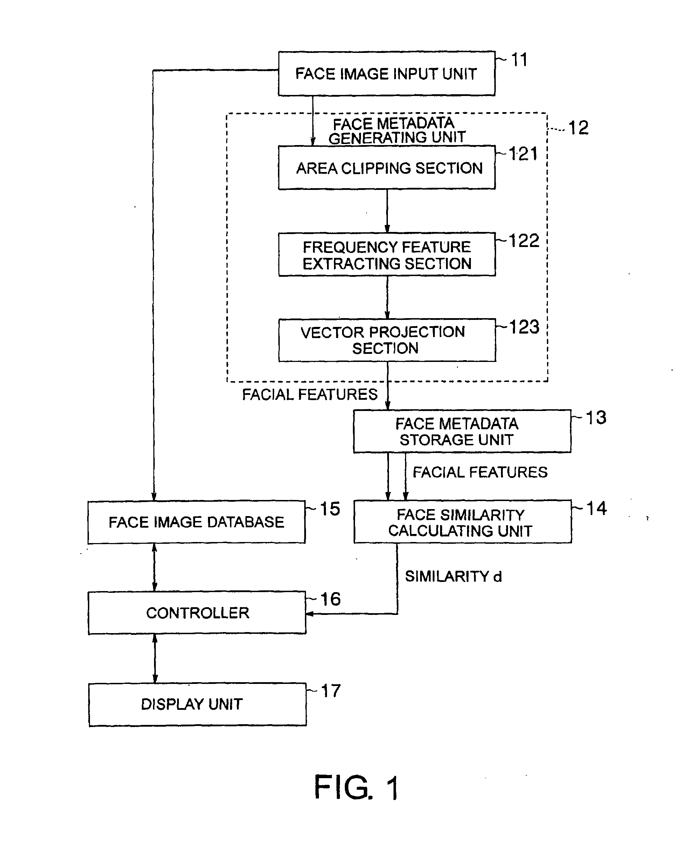

Fig. 1 is a block diagram of the structure of a face image matching system including a face metadata generating unit according to an embodiment of the present invention.

Best Mode for Carrying Out the Invention

To describe the present invention in more detail, the present invention will now be explained with reference to the accompanying drawing.

Fig. 1 is a block diagram of a face image matching system including a face metadata generating unit according to the present invention.

The face image matching system will now be described in detail hereinbelow with reference to Fig. 1.

As shown in Fig. 1, the face image matching system according to the present invention comprises a face image input unit 11 for inputting a face image, a face metadata generating unit 12 for generating face metadata from a face image inputted by the face image input unit 11, a face metadata storage unit 13 for storing therein face metadata generated (extracted) by the face metadata generating unit 12, a face similarity calculating unit 14 for calculating a similarity of a face from the face metadata, a face image database 15 for storing the face images, a controller 16 for controlling, in response to a registration request and a retrieval request of the image, input of the image, generation of the metadata, storing of the metadata, and calculation of face similarity, and a display unit 17 for displaying the face image and other information.

The face metadata generating unit 12 comprises an area clipping section 121 for clipping local areas of the inputted face image, a frequency feature extracting section 122 for extracting frequency features for the clipped areas, and a vector projection section 123 for projecting feature vectors, which are vectors consisting of the frequency features, onto subspaces to extract feature vectors. The face metadata generating unit 12 extracts feature vectors in a plurality of different local areas to generate face metadata.

To register a face image, a face photograph or the like is inputted using the face image input unit 11 such as a scanner or a video camera such that the size and position of a face are adjusted. Alternatively, the face of a person can be inputted directly by the video camera. In this case, a face detection technique as described in the above-mentioned document by Mohaddam may be used to detect a face position of an inputted image. Preferably, the size or the like of a face image may be automatically normalized.

An inputted face image is registered in the face image database 15 as necessary. Simultaneously with the registration of the face image, face metadata is generated by the face metadata generating unit 12. The generated face metadata is stored to the face metadata storage unit 13.

In retrieval, as in the case of the registration, a face image is inputted by the face image input unit 11 and face metadata is then generated by the face metadata generating unit 12. The generated face metadata is temporarily registered in the face metadata storage unit 13. Alternatively, the face metadata is directly transmitted to the face similarity calculating unit 14.

In the retrieval, to previously determine whether the inputted face image has already been stored in the database (face identification), the face similarity calculating unit 14 calculates a similarity between the inputted face image and each of data registered in the face metadata storage unit 13. On the basis of the result of the highest similarity, the controller 16 selects a face image from the face image database 15 and allows the display unit 17 to display the face image. The operator verifies the matching between the retrieved image and the image to be registered.

On the other hand, to previously determine whether a face image specified by an ID number or the like matches with a retrieved face image (face verification), the face similarity calculating unit 14 calculates whether the retrieved image matches with the face image specified by the ID number. If a similarity therebetween is lower than a predetermined similarity, the controller 16 determines that there is no match. If the similarity therebetween is higher than the predetermined similarity, the controller 16 determines that there is a match. The controller 16 allows the display unit 17 to display the verification result. If this system is used for entrance control, instead of providing a visual indication of a face image, the controller 16 transmits a control signal to an automatic door to control the automatic door. Thus, entrance can be controlled.

The face image matching system operates as mentioned above. The above-mentioned operation can also be realized on a computer system. For example, a metadata generation program for executing metadata generation, as will be described in detail later, and a similarity calculation program are stored in a memory. Those programs are executed by a program control processor. Thus, face image matching can be realized.

The operation of the face image matching system, particularly, the operation of the face metadata generating unit 12 and that of the face similarity calculating unit 14 will now be described in detail hereinbelow.

(1) Face Metadata Generation

First, the operation of the face metadata generating unit 12 will be described.

The face metadata generating unit 12 extracts a facial feature using an image I $(x, y)$ whose position and size are normalized. For the normalization of the position and size, for instance, the image may be normalized so that the positions of respective eyes are set to (32, 48) and (62, 48) and the size of the image corresponds to $92\times112$ pixels. In the following description, it is assumed that the image is normalized to this size.

The area clipping section 121 then clips a plurality of previously set local areas of the face image. For example, the above-mentioned image is separated into 42 (= M) local areas each having 16x16 pixels. Points in $(x, y) = (15*I + 8, 15*j + 10)$ (I = 0, 1, 2, ..., 5; j = 0, 1, 2, ..., 6) at regular intervals are the centers of the respective local areas. First, the area clipping section 121 clips a local area s $(x, y)$ as one area $(i, j) = (0, 0)$.

In the above-mentioned clipping of the local areas, each local area is clipped at a predetermined position. A face image is divided into partial areas serving as parts (the eyes, nose, mouth, and eyebrows) of a face, the partial areas are detected to find out area positions corresponding to the respective local areas from the face image, clipping positions are corrected, and after that, the local areas are clipped. Thus, displacements of the respective parts caused by the orientation of the face can be corrected, which leads to extraction of more stabilized facial feature. For example, templates of local areas are formed on the basis of an average face calculated from averages of inputted images. Each template is searched in the vicinity of a reference position (position in the average face may be used) for template search. A clipping position is corrected on the basis of a template matching position. Then, a local area (partial area of the face) is clipped. In this template matching, normalized correlation is used.

In the above description, a template corresponds to a facial part. Local areas can be defined by uniform sampling as mentioned above.

As mentioned above, facial parts are held as templates and the positions of respective templates are corrected, thus correcting displacements of local areas (facial parts) which cannot be corrected based on alignment of the entire face and are caused by a change in attitude. After that, local features of the face are extracted. Consequently, the output features of the local areas can be stabilized, resulting in an increase in identification accuracy.

As another example of facial part detection, for example, a facial part extraction technique is disclosed in Japanese Unexamined Patent Publication No. 10-307923. According to this technique, facial parts can be extracted.

The frequency feature extracting section 122 performs Fourier transform to the clipped local areas s(x, y) by two-dimensional discrete Fourier transform and calculates power $|S(u, v)|$ of an obtained Fourier spectrum S(u, v). A calculating method for obtaining a Fourier spectrum S(u, v) using discrete Fourier transform for a two-dimensional image is well known. For example, this method is explained in a document (by Rosenfeld, "Dijitaru Gazo Shori (Digital Image Processing)", pp. 20-26, Kindaikagaku Corporation). Accordingly, the description of this method is omitted.

The two-dimensional Fourier power spectrum $|S(u, v)|$ is obtained as mentioned above by transforming two-dimensional real components of the image. Accordingly, the obtained Fourier frequency components are symmetric.

Therefore, the power spectrum |S(u, v)| has 256 components (u = 0, 1, ..., 15; v = 0, 1, ..., 15). 128 components as the half components (u = 0, 1, ..., 15; v = 0, 1, ..., 7) are substantially the same as the other half components (u = 0, 1, ..., 15; v = 8, 9, ..., 15). The frequency feature extracting section 122 eliminates |S(0, 0)| as a DC component which is susceptible to a change in illumination and then extracts a power spectrum of the other 127 components of the first half components as frequency features.

Instead of Fourier transform, discrete cosine transform or discrete sine transform can be used and expansion coefficients can be extracted as frequency features. In the case using discrete cosine transform, an image is transformed such that coordinates in the origin of the image are arranged at the center of the image. Thus, a feature can be extracted so that, particularly, asymmetric components of a face (particularly, right and left asymmetric components) are not extracted. In the case using discrete cosine transform or discrete sine transform, translation invariance is not always achieved as in Fourier power. Accordingly, the accuracy of alignment, previously performed, easily affects a result. Therefore, it is necessary to pay attention to the alignment.

Subsequently, the vector projection section 123 handles 127 facial features, extracted as frequency features, as vectors. Partial areas are predefined as follows. A face image set for training is prepared. Frequency feature vectors of clipped areas corresponding to the face image set are subjected to the principal component analysis, thus obtaining basis vectors (eigenvectors). Partial areas are predefined by the basis vectors. A method for obtaining basis vectors is described in various documents, for example, the above-mentioned document by Moghaddam and Japanese Unexamined Patent Publication No. 5-20442. This method is generally well known. Accordingly, the description thereof is omitted. It is assumed that each basis vector includes N components (first to N-th principal components) in decreasing order of eigenvalues. For the N components, five components are enough. Original 256 feature dimensions can be compressed by a factor of 50. The reason is that dimensional compression by the principal component analysis (K-L expansion) has high effects. Facial features can be described in compact size. A subspace serving as a feature space is specified using those N basis vectors. However, the basis vectors are not normalized to unit vectors. For the basis vectors, the components of vectors are normalized using eigenvalues corresponding to respective eigenvectors and the resultant vectors are used as basis vectors.

In other words, assuming that a matrix having elements as basis vectors serving as orthonormal basis is set to U, the component of each basis vector $U_k$, serving as a unit vector of length 1, as one element of the matrix U is divided by the square root of the corresponding eigenvalue $\lambda_k$. In this manner, the basis vectors are previously transformed. Consequently, the amount of matching operation using Mahalanobis distance can be reduced in identification, which will be described later.

The above fact will now be described in more detail. It is assumed that two frequency feature vectors $x_1$ and $x_2$ are projected onto subspaces using the orthonormal basis matrix U to obtain vectors $y_1$ and $y_2$. Thus, $y_1 = Ux_1$ and $y_2 = Ux_2$. To measure a distance between two patterns using Mahalanobis distance,

$$d(y_1, y_2) = \sum_{k=1}^{N} |y_{1,k} - y_{2,k}|^2 / \lambda_k$$

$$= \sum_{k=1}^{N} |y_{1,k} / \lambda_k^{1/2} - y_{2,k} / \lambda_k^{1/2}|^2$$

$$\sum_{k=1}^{N} |U_k x_1 / \lambda_k^{1/2} - U_k x_2 / \lambda_k^{1/2}|^2 \qquad (1)$$

In other words, if a basis vector $U_k/\lambda_k^{1/2}$, obtained by previously dividing the component by the eigenvalue, is used as a basis vector, Mahalanobis distance is the squared distance between a vector $y_1' = (U_k/\lambda_k^{1/2})x_1$ and a vector $y_2' = (U_k/\lambda_k^{1/2})x_2$, which are projected using the matrix. Thus, the amount of operation can be reduced. Hitherto, in many cases, a mean vector has been drawn in order to obtain a projection on subspaces. If a similarity is calculated using distances such as squared distances, feature vectors are merely shifted with respect to the origin. Accordingly, drawing the mean vector is not important so long as respective distances between feature vectors and the corresponding vectors are uniformed.

In this manner, the vector projection section 123 can extract feature vectors projected on the N(= 5)-dimensional subspaces. According to the above-mentioned principal component analysis, features of an original image can be approximately represented with compact size in a small number of dimensions. The representation of a facial feature with a small number of dimensions results in a reduction in description length of metadata and an increase in matching speed.

The above description relates to the case where according to the principal component analysis, frequency vectors are projected onto subspaces to extract a facial feature. In addition, as described in the foregoing document by Zhao, the discriminant analysis may be used and basis vectors serving as feature components may be selected. In this case as well, according to the discriminant analysis, five basis vectors are selected in a manner similar to the above description and the selected vectors are projected onto subspaces as in the case using the principal component analysis. So long as training data sets are enough, the discriminant analysis has higher accuracy than the principal component analysis. Therefore, if enough training data sets are collected, it is preferable to use the discriminant analysis. A method for selecting basis vectors is described in the foregoing document by Zhao and is also well known. The detailed description thereof is omitted.

Similarly, the independent component analysis may be used as a method for selecting non-orthogonal basis vectors. Basis vectors may be selected by the independent component analysis. When basis vectors are selected by the independent component analysis, the basis vectors serve as non-orthogonal basis vectors. In this case, frequency feature vectors can be projected onto subspaces selected similarly. The independent component analysis is also well known. For example, it is disclosed in the foregoing document by Umeyama et al. The detailed description thereof is omitted.

When subspaces are selected by the discriminant analysis or the independent component analysis, values corresponding to the eigenvalue $\lambda_k$ used in the principal component analysis are calculated separately. Feature vectors projected on subspaces in a training set are used. The distribution thereof may be calculated every element of each feature vector. In this instance, obtaining a within-class distribution (corresponding to a distribution of observational errors) from differences between elements of a person and those of the other one, which can be assumed to be identical with each other, exhibits higher performance than using a distribution of elements of the entire training set (corresponding to a distribution of patterns, i.e., between-class distribution). Therefore, it is preferable to normalize the basis matrix U using the within-class distribution.

The above-mentioned operation is performed every local area s(x, y), so that the facial feature consisting of M (= 42) vectors each having N (=5) elements can be obtained. The face metadata generating unit 12 generates the facial feature as face metadata for the inputted face image.

As mentioned above, the above-mentioned face metadata generation procedure can be executed through a computer according to a computer program.

(2) Calculation of Face Similarity

The operation of the face similarity calculating unit 14 will now be described.

The face similarity calculating unit 14 calculates a similarity $d(\{y_1^i\}, \{y_2^i\})$ between two faces using M N-dimensional feature vectors $\{y_1^i\}$ and $\{y_2^i\}$ (i = 1, 2, ..., M). The M feature vectors are obtained from two face metadata.

For example, the similarity is calculated by the following expression (square distance).

$$d(\{y_1^i\}, \{y_2^i\}) = \sum_{i=1}^{M} w_i (\sum_{k=1}^{N} |y_{1,k}^i - y_{2,k}^i|^2) \qquad (2)$$

In this case, the distance serves as the Mahalanobis distance as mentioned above because a basis matrix is previously normalized by eigenvalues. Alternatively, the similarity can also be calculated by a linear combination of cosines of feature vectors to be compared. In this case, the similarity is expressed by the following expression.

$$d(\{y_1^i\}, \{y_2^i\}) = \sum_{i=1}^{M} (w_i y_1 \bullet y_2 / |y_1\| y_2|) \qquad (3)$$

Where, $w_i$ denotes a weighting coefficient for each local area. For example, when $\mu_i$ denotes an average of similarities (the Mahalanobis distances or cosines of vectors) between feature vectors every local area i in respective face images to be identical with each other in a training set prepared, the reciprocal $1/\mu_i$ thereof can be used as the weighting coefficient $w_i$.

Weighting is performed every area as mentioned above. Thus, a small weight $w_i$ is given to each unstable local area (local area in which the value of $\mu_i$ is large). As a local area is more effective, the area has a more significant feature with a large weight $w_i$. Reliability as a weight is given to each local area, thus realizing identification with high accuracy.

In the use of distances, as a value is larger, a similarity is lower (a low similarity means that the faces do not look alike). In the use of cosines, as a value is larger, a similarity is larger (a large similarity means that the faces look alike).

The above description relates to the case where one face image is registered and retrieval is performed using this face image. When a plurality of images of the face of one person are registered and retrieval is performed using one face image, for example, a similarity can be calculated using metadata of the respective registered face images.

Similarly, when a plurality of images of one face are registered and retrieval is performed using a plurality of images, an average of similarities of combinations or the minimum value thereof is obtained to calculate a similarity. Thus, a similarity with respect to one face data can be calculated. This means that if moving pictures are regarded as a plurality of images, the matching system according to the present invention can be applied to face recognition in moving pictures.

As mentioned above, according to the present invention, a face image is separated into a plurality of local areas, frequency features of a Fourier frequency spectrum or the like for the respective clipped areas are extracted, the extracted frequency features are projected onto subspaces according to a method such as the principal component analysis or the independent component analysis to obtain feature vectors, and the feature vectors are generated as face metadata. Thus, the face metadata has a compact description length and has characteristics that are stable to partial positional changes. Face recognition can be achieved at high speed with high accuracy by using such face metadata.

**Claims**

1. A face metadata generating method (12) of generating metadata related to face information of an image, said face metadata generating method comprising:

   a step (121) of clipping a plurality of different local areas of said image;
   a step (122) of extracting frequency features for the respective local areas; and
   a step (123) of projecting feature vectors, which are vectors consisting of said frequency features, onto predefined subspaces;
   thereby extracting the projected feature vectors of the respective local areas so as to generate the projected feature vectors as face metadata.

2. The face metadata generating method according to claim 1, wherein power spectral intensities of Fourier frequencies obtained by discrete Fourier transform are extracted as said frequency features.

3. The face metadata generating method according to claim 1, wherein expansion coefficients obtained by discrete cosine transform are extracted as said frequency features.

4. The face metadata generating method according to claim 1, wherein expansion coefficients obtained by discrete sine transform are extracted as said frequency features.

5. The face metadata generating method according to claim 1, wherein said subspaces are specified by basis vectors previously obtained by principal component analysis for frequency features, and frequency feature vectors are projected onto the specified subspaces to calculate principal component vectors.

6. The face metadata generating method according to claim 1, wherein said subspaces are specified by basis vectors previously obtained by independent component analysis for frequency features, and frequency feature vectors are projected onto the specified subspaces to calculate feature vectors.

7. The face metadata generating method according to claim 1, wherein said subspaces are specified by basis vectors previously obtained by discriminant analysis for frequency features, and frequency feature vectors are projected onto the specified subspaces to calculate feature vectors.

8. The face metadata generating method according to claim 1, wherein area positions corresponding to the respective local areas are searched as said local areas in said image, clipping positions are obtained, and after that, the local areas are clipped.

9. A face metadata generating unit (12) of generating metadata related to face information of an image, said face metadata generating unit comprising at least:

   area clipping means (121) for clipping local areas of said image;
   frequency feature extracting means (122) for extracting frequency features for the areas clipped by said area clipping means; and
   vector projection means (123) for projecting feature vectors, which are vectors consisting of the frequency features extracted by said frequency feature extracting means, onto predefined subspaces;
   thereby extracting the projected feature vectors of a plurality of different local areas so as to generate the projected feature vectors as face metadata.

10. The face metadata generating unit according to claim 9, wherein said frequency feature extracting means (122) extracts power spectral intensities of Fourier frequencies, obtained by discrete Fourier transform, as frequency features.

11. The face metadata generating unit according to claim 9, wherein said frequency feature extracting means (122) extracts expansion coefficients, obtained by discrete cosine transform, as frequency features.

12. The face metadata generating unit according to claim 9, wherein said frequency feature extracting means (122) extracts expansion coefficients, obtained by discrete sine transform, as frequency features.

13. The face metadata generating unit according to claim 9, wherein said vector projection means (123) projects frequency feature vectors onto subspaces specified by basis vectors, which are previously obtained by principal component analysis for the frequency features, to calculate principal component vectors.

14. The face metadata generating unit according to claim 9, wherein said vector projection means (123) projects frequency feature vectors onto subspaces specified by basis vectors, which are previously obtained by independent component analysis for the frequency features, to calculate the feature vectors.

15. The face metadata generating unit according to claim 9, wherein said vector projection means (123) projects frequency feature vectors onto subspaces specified by basis vectors, which are previously obtained by discriminant analysis for the frequency features, to calculate the feature vectors.

16. The face metadata generating unit according to claim 9, wherein said area clipping means (121) searches for area positions corresponding to the respective local areas in said image to obtain clipping positions, and then clips the local areas.

17. A program making a computer generate metadata related to face information of an image, said program making said computer realize:

   a function (121) for clipping a plurality of different local areas of said image;
   a function (122) for extracting frequency features for the respective local areas; and
   a function (123) for projecting feature vectors, which are vectors consisting of said frequency features, onto predefined subspaces,
   thereby making said computer extract the projected feature vectors of the respective local areas and generate the projected feature vectors as face metadata.

18. A face image matching system comprising a face image input unit (11) for inputting a face image, a face metadata generating unit (12) for generating face metadata from an inputted face image, a face metadata storage unit (13) for storing generated face metadata therein, a face similarity calculating unit (14) for calculating a similarity of a face from said face metadata, a face image database (15) for storing said face images, a controller (16) for controlling, in response to a registration request and a retrieval request of the image, input of the image, generation of the metadata, storing of the metadata, and calculation of face similarity, and a display unit (17) for displaying the face image and other information, wherein said face metadata generating unit (12) comprises:

   area clipping means (121) for clipping local areas of said face image;
   frequency feature extracting means (122) for extracting frequency features for the areas clipped by said area clipping means; and

vector projection means (123) for projecting feature vectors, which are vectors consisting of the frequency features extracted by said frequency feature extracting means, onto predefined subspaces.

FACE IMAGE INPUT UNIT ~11

FACE METADATA
GENERATING UNIT ¦---12

AREA CLIPPING SECTION ~121

FREQUENCY FEATURE
EXTRACTING SECTION ~122

VECTOR PROJECTION
SECTION ~123

FACIAL FEATURES

FACE METADATA
STORAGE UNIT ~13

FACIAL FEATURES

FACE IMAGE DATABASE ~15

FACE SIMILARITY
CALCULATING UNIT ~14

SIMILARITY d

CONTROLLER ~16

DISPLAY UNIT ~17

# FIG. 1

## INTERNATIONAL SEARCH REPORT

| | International application No. |
|---|---|
| | PCT/JP03/03976 |

| A. | CLASSIFICATION OF SUBJECT MATTER |
|---|---|
| | Int.Cl⁷ G06T1/00, G06T7/00 |

According to International Patent Classification (IPC) or to both national classification and IPC

| B. | FIELDS SEARCHED |
|---|---|

Minimum documentation searched (classification system followed by classification symbols)
     Int.Cl⁷ G06T1/00, G06T7/00

Documentation searched other than minimum documentation to the extent that such documents are included in the fields searched

Electronic data base consulted during the international search (name of data base and, where practicable, search terms used)
     JSTPlus (JOIS)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | JP 05-020442 A  (Nippon Telegraph And Telephone Corp.), 29 January, 1993 (29.01.93), Full text; all drawings (Family: none) | 1-18 |
| Y | JP 2001-307096 A  (Fujitsu Ltd.), 02 November, 2001 (02.11.01), Par. Nos. [0025], [0036] to [0094]; Figs. 6, 8 & US 2001/0038714 A1 | 1-18 |
| Y | JP 2001-338293 A  (Fujitsu Ltd.), 07 December, 2001 (07.12.01), Par. Nos. [0002] to [0022] (Family: none) | 1-18 |

| ☐ | Further documents are listed in the continuation of Box C. | ☐ | See patent family annex. |
|---|---|---|---|

| * | Special categories of cited documents: |
|---|---|
| "A" | document defining the general state of the art which is not considered to be of particular relevance |
| "E" | earlier document but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 01 May, 2003 (01.05.03) | 20 May, 2003 (20.05.03) |

| Name and mailing address of the ISA/ | Authorized officer |
|---|---|
| Japanese Patent Office | |
| Facsimile No. | Telephone No. |

Form PCT/ISA/210 (second sheet) (July 1998)